# EUROPÄISCHE PATENTSCHRIFT

(11) **EP 1 476 516 B1**
(45) Veröffentlichungstag und Bekanntmachung des Hinweises auf die Patenterteilung: **07.09.2005**
(21) Anmeldenummer: 03742522.0
(22) Anmeldetag: 15.02.2003
(51) Int. Cl.: C09D 179/08, H01B 3/30, C09D 7/00

(54) **KRESOLFREIE BZW. KRESOLARME DRAHTLACKE**
WIRE ENAMELS THAT ARE DEVOID OF OR LOW IN CRESOL
VERNIS POUR FILS METALLIQUES EXEMPT DE CRESOL OU A FAIBLE TENEUR EN CRESOL

(30) Priorität: 19.02.2002 DE 10206781
(43) Veröffentlichungstag der Anmeldung: 17.11.2004
(73) Patentinhaber: Altana Electrical Insulation GmbH, 46483 Wesel (DE)
(72) Erfinder: STEVENS, Günter, 47906 Kempen (DE); Biondi, Giovanna, I-63039 Ascoli Piceno (IT); PENCZEK, Piotr, PL-00-087 Warszawa (PL); WARDZINSKA, Elzbieta, PL-05-825 Grodzisk Mazowiecki (PL)
(74) Vertreter: Leifert & Steffan
(86) Internationale Anmeldenummer: PCT/EP2003/001525
(87) Internationale Veröffentlichungsnummer: WO 2003/070845

(56) Entgegenhaltungen:
- DE-A- 2 739 717
- DE-A- 4 133 161
- DE-B- 1 058 666
- FR-A- 2 650 829

## Beschreibung

Die vorliegende Erfindung betrifft Drahtlacke auf der Basis von Polyester-, Polyesterimid-, Polyamidimid- und/oder Polyurethanharzen, die eines oder mehrere der genannten Harze als Bindemittel sowie organische Lösemittel und gegebenenfalls Verdünnungsmittel enthalten. Die Erfindung betrifft auch Verfahren zur Herstellung dieser Drahtlacke.

In der Technik werden seit vielen Jahren Polyester- bzw. Polyesterimid-Drahtlacke verwendet. Die bekannten Drahtlacke enthalten üblicherweise Lösernittelgemische aus Phenol, dessen Homologen, wie beispielsweise Kresolen und Xylenolen, und aromatischen Kohlenwasserstoffen.

Die genannten Lösemittel, wie zum Beispiel Kresol, werden bei der Herstellung der Drahtlacke benutzt, indem sie zur Auflösung der getrennt hergestellten Harze verwendet werden. Sie können auch als Reaktionsmedium, insbesondere bei der Synthese von Polyester- und Polyesterimiden eingesetzt werden. Weiterhin können sie als Hilfskomponente in der letzten Stufe der Herstellung von Polyester- und Polyesterimidharzen aus Dicarbonsäuren oder deren Dimethylestern, Glykolen, mehrwertigen Alkoholen, wie Tris-(2-hydroxyethyl)-isocyanurat, und - im Falle der Polyesterimidharze - auch aus Trimellitsäureanhydrid, Diaminen und gegebenenfalls Bisphenolen durch Veresterung, Umesterung und bei Polyesterimidharzen durch Imidisierung zur Emiedrigung der Viskosität des Reaktionsgemisches und zur Beschleunigung des Abdestillierens der flüchtigen Reaktionsprodukte verwendet werden.

Als Hilfskomponenten in der letzten Stufe der Polyester- und Polyesterimid-Herstellung werden vorwiegend Kresole und andere phenolische Lösemittel wie Xylenole und Trimethylphenole, wie z.B. Mesitol eingesetzt.

In den Polyester- und Polyesterimidlacken werden üblicherweise Gemische von Lösemitteln und Verdünnern angewendet. Während Lösemittel geeignet und notwendig sind, um die Drahtlacke vollständig zu lösen, besitzen die Verdünnungsmittel diese Lösungseigenschaften nicht.

Sie sind jedoch geeignet, eine bereits vorliegende Lösung zu verdünnen, wobei vorteilhafte Viskositäten der Harzlösungen resultieren. Verdünnungsmittel werden aus verschiedenen Gründen zugegeben: Einerseits sind die üblicherweise eingesetzten aromatischen Kohlenwasserstoffe deutlich preiswerter als die speziellen Lösemittel wie Kresole, Phenol oder Xylenole. Andererseits verdampft während der kontinuierlichen Applikation der Drahtlacke das verwendete Lösemittel relativ schnell. Damit beim Einbrennen ein gleichmäßiges Abdampfverhalten entsteht, ist man bestrebt, einen möglichst harmonischen Verlauf des Abdampfverhaltens des sich stetig verändernden Azeotrops zu erreichen. Sprunghafte Änderungen verursachen oft Oberflächenstörungen im ausgehärteten Lackfilm.

Als Verdünnungsmittel werden in der Regel Gemische aromatischer Kohlenwasserstoffe, wie Solvesso und Solvent-Naphtha, eingesetzt.

Es gibt seit langem Bestrebungen, Kresole und andere Phenole in Drahtlacken zu vermeiden. Dies beruht einmal auf der durch die genannten Lösemittel verursachten Geruchsbelästigung und ihrer gesundheitsschädlichen Wirkung. Insbesondere dürfen diese Lösemittel und ihre Pyrolyseprodukte aufgrund der Umweltschutzbestimmungen nur in sehr geringen Mengen in den Abgasen der Einbrennöfen enthalten sein. Bei der Herstellung der Drahtlacke entstehen unter Umständen Abwässer, die schädliche phenolische Verbindungen enthalten können.

Aus der DE-A-41 33 161 ist es bekannt, hochsiedende Monoalkohole, wie z. B. Benzylalkohol oder Methyldiglykol, Alkylenglykolacetate, Alkylenglykoletheracetate, Ester und Ketone als Lösemittel zu verwenden. Nachteilig und erforderlich ist es hierbei, die Struktur der Polyester- oder Polyesterimidharze zu verändern, so dass veränderte mechanische Eigenschaften der Lackschichten und der Drähte resultieren. Es sind weiterhin Lösemittel- und Verdünnungsmittel-Gemische bekannt, die frei von den phenolischen Substanzen sind. Diese Gemische stellen Mehrkomponentensysteme dar, welche Cyclohexanon, Cyclohexanol, Solvent-Naphtha, Benzylalkohol und Propylencarbonat enthalten (Wardzinska E. u.a., XXII FATIPEC-Congr., Budapest 1994, Val. 2, S. 34).

Der Nachteil dieser Systeme liegt darin, dass die Oberflächen der emaillierten Drähte uneben sind, das heißt, Orangenhaut-Struktur besitzen.

Der Erfindung liegt die Aufgabe zugrunde, Drahtlacke zu formulieren, die nicht toxische, geruchsarme und umweltfreundliche hochsiedende Lösemittel enthalten.

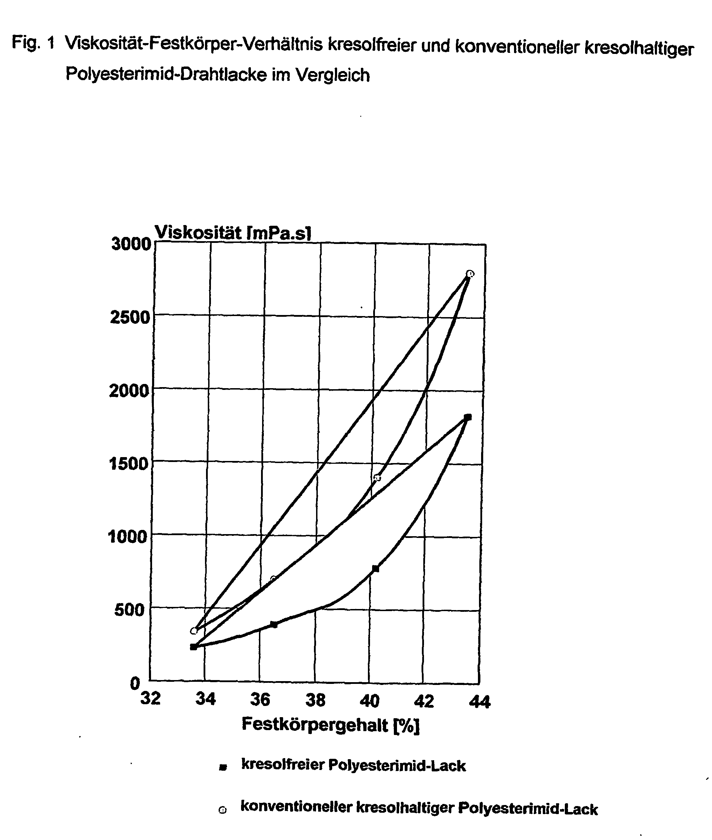

Überraschenderweise wurde gefunden, dass diese Aufgabe durch den Einsatz von monocyclischen aromatischen Alkyl-Carbonsäureestern und Isophoron als Lösemittel der hier in Rede stehenden Drahtlacke gelöst werden kann. Harzlösungen mit diesen Löse- bzw. Verdünnungsmittel weisen vorteilhafte Eigenschaften auf. So ist bei verbesserten mechanischen Eigenschaften der mit diesen Lacken emaillierten Drähte, wie z.B. der Wickelfestigkeit nach DIN EN 60851-3, insbesondere die reduzierte Viskosität der Lacklösungen im Vergleich zu konventionellen Drahtlacken zu erwähnen. Ein Vergleich dieser Viskositäten ist in Fig. 1 zur Verdeutlichung dargestellt. Erstaunlicherweise sind sie in bisherigen Patentschriften nicht genannt.

Gegenstand der Erfindung sind daher Drahtlacke auf der Basis von Polyester-, Polyesterimid-, Polyamidimid- und/oder Polyurethanharzen, die eines oder mehrere der genannten Harze als Bindemittel sowohl organische Lösemittel und gegebenenfalls Verdünnungsmittel enthalten und die dadurch gekennzeichnet sind, dass mindestens 50 Gew.-% des Lösemittels oder des Lösemittel-Verdünnungsmittel-Gemisches aus einem monocyclischen aromatischen Alkyl-Carbonsäureester der allgemeinen Formel 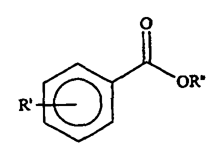 wobei R' = H, -CₙH₂ₙ₊₁ mit n = 1 bis 3 in m- oder p-Stellung ist, bevorzugt H, und wobei R" = -CₙH₂ₙ₊₁ mit n = 1 bis 10 ist, bevorzugt n = 1 bis 3 insbesondere bevorzugt n = 1, oder ein cycloaliphatischer Rest der allgemeinen Form -CₙH₂ₙ₋₁ mit n = 5 bis 10 ist, bevorzugt n = 5 - 7, insbesondere bevorzugt n = 6, mit Isophoron besteht.

Vorteilhaft enthalten die Drahtlacke als weiteres Lösemittel 2-Phenoxyethanol in einer Menge von 10 bis 50 Gew.-% bezogen auf den Gesamtanteil an Lösemitteln und Verdünnungsmitteln.

Vorteilhaft besteht das Lösemittel oder das Lösemittel-Verdünnungsmittel-Gemisch der erfindungsgemäßen Drahtlacke zu 80 - 100 Gew.-% aus Methylbenzoat und/oder Isophoron.

Es wird angestrebt, dass ein monocyclischer aromatischer Alkyl-Carbonsäureester und Isophoron als einziges Lösemittel eingesetzt werden, zumindest bilden sie erfindungsgemäß die Hauptkomponente des Lösemittels oder des Lösemittel-Verdünnungsmittel- Gemisches.

Auch wenn es in manchen Fällen aus technischen oder wirtschaftlichen Gründen sinnvoll erscheint, die bisher im Stand der Technik eingesetzten Lösemittel oder Verdünnungsmittel mitzuverwenden, so wird doch in jedem Falle durch die vorliegende Erfindung eine deutliche Reduzierung der unerwünschten Lösemittel erreicht.

Eine andere Drahtlackklasse stellen die Polyamidimide und Polyurethane dar.
Polyamidimide und Polyurethane sind nur in stark polaren Lösungsmitteln oder in Kombination mit den erfindungsgemäßen Lösungsmitteln löslich.
Daher wird im Stand der Technik die Synthese dieser Polymere nach dem bekannten Verfahren in stark polaren Lösemitteln, wie N-Methylpyrrolidon, N,N-Dimethylformamid und/oder N,N-Dimethylacetamid durchgeführt. Überraschend ist daher die gefundene hohe Lösekraft des Isophorons. Der Vorteil der erfindungsgemäß einzusetzenden Lösemittel liegt auch darin, daß sie unter den Bedingungen der Polyamidimid- und Polyurethansynthese mit den Reaktionspartnern, wie insbesondere den Diisocyanaten, Trimellitsäureanhydrid und Polyesteralkoholen, nicht reagieren.

Sowohl Methylbenzoat als auch Isophoron werden erfindungsgemäß bevorzugt als die Hauptkomponente der Lösemittel-Verdünnungsmittel-Gemische für Polyester- und Polyesterimiddrahtlacke benutzt. Dank der hohen Lösekraft dieser beiden Lösemittel können beträchtliche Mengen aromatischer Kohlenwasserstoffe, wie Solventnaphtha, in diese Gemische eingeführt werden, wenn dies erwünscht wird. Die aromatischen Kohlenwasserstoffe weisen eine hohe Verbrennungswärme auf, so daß auch die Lösemittelgemische über die hohe Verbrennungswärme verfügen. Dies ist für das Erwärmen des Verbrennungskatalysators und der zu verbrennenden Lösemitteldämpfe günstig.

Außer Methylbenzoat bzw. Isophoron und Solventnaphtha enthalten die erfindungsgemäßen Polyester- und Polyesterimiddrahtlacke Cyclohexanon, Dimethylester aliphatischer Dicarbonsäuren, wie z. B. Dimethylsuccinat, Dimethylglutarat und Dimethyladipat, Glycolester und Glycoletherester. Andere an sich bekannte Lösemittel und Verdünnungsmittel können auch enthalten sein, wobei aber Phenole und stickstoffhaltige protonenfreie Amid-Lösemittel nicht zugesetzt werden sollen. Erfindungsgemäß ist ein hoher Anteil von monocyclischen aromatischen Alkyl-Carbonsäureestem und Isophoron von entscheidender Bedeutung.

Der Festkörpergehalt der Drahtlacke beträgt vorteilhaft 20 - 60 Gew.-%. Niedrigere Werte sind unwirtschaftlich, und bei Festkörpergehalten von mehr als 60 Gew.-% wird die Verarbeitbarkeit der Drahtlacke aufgrund der hohen Viskosität beeinträchtigt.

Die Erfindung betrifft auch Verfahren zur Herstellung der Drahtlacke. Es ist möglich, die Bindemittel der Drahtlacke separat herzustellen und sie danach in Methylbenzoat und Isophoron zu lösen.

Vorteilhaft werden das oder die Bindemittel in einem Lösemittelgemisch gelöst, das neben dem Alkyl-Carbonsäureester und Isophoron als weiteres Lösemittel 2-Phenoxyethanol in einer Menge von 10 bis 50 Gew.-% bezogen auf das gesamte Lösemittelgemisch enthält.

Vorteilhaft jedoch werden die Bindemittel unmittelbar in einer Mischung von Methylbenzoat und Isophoron hergestellt.

Wenn Kresole in der letzten Herstellungsstufe der Polyester- und Polyesterimidharze zugesetzt werden, gelangt ein Teil des Kresols in die Harzlösung, d. h. in den Drahtlack. Wenn also der Lack ohnehin Kresol enthält, hätte es keinen Sinn, ein kresolfreies Gemisch von Lösemitteln und Verdünnungsmitteln einzusetzen. Jedoch wird erfindungsgemäß vorteilhaft in der letzten Herstellungsstufe anstelle Kresol Isophoron eingesetzt. Methylbenzoat eignet sich hierbei nicht in jedem Falle, weil es unter Umständen mit anderen Bestandteilen des Polyester- oder Polyesterimidharzes durch Umesterung reagieren kann.

Es wurde gefunden, daß Isophoron nicht nur die Viskosität des Reaktionsgemisches herabsetzt und die azeotrope Beseitigung des Kondensationswassers erleichtert, sondern auch die in Folge der Sublimation in den oberen Teilen der Apparatur auskristailisierten Substanzen ausspült und diese rasch in das Reaktionsgemisch zurückführt.

Die Erfindung wird anhand folgender Ausführungsbeispiele näher erläutert :

### Beispiel 1 :

250 g 4,4'-Diisocyanatodiphenylmethan, 380 g Polyesteralkohol aus Adipinsäure, Terephthalsäure, Ethylenglycol und Glyzerin und 1 g Dibutylzinndilaurat werden in 631 g Isophoron gelöst und bei 140 °C unter Rühren umgesetzt. Es bildet sich eine 50%ige Lösung des Polyurethanharzes in Isophoron. Anschließend werden blockiertes Isocyanat als Vernetzer und ein Katalysator zugegeben und in der Polyurethan-Isophoron-Lösung homogen gemischt.

### Beispiel 2 :

Durch gemeinsame Kondensation von 120 g Ethylenglycol, 166 g Terephthalsäure, 326 g Tris(2-hydroxyethyl)isocyanurat und 1 g Zinkacetat bei der Temperatur von 200 °C wird ein Polyester-Vorprodukt hergestellt. Nach dem Abdestillieren von min. 80 Gew.-% der theoretischen Menge Kondensationswassers wird 50 g Isophoron zugesetzt und die Kondensation wird bei 220 °C fortgesetzt. Isophoron destilliert zusammen mit Kondensationswasser ab. Ein Teil des zugesetzten Isophorons verbleibt im Kondensationsprodukt.

Vorteilhaft werden das oder die Bindemittel in einem Lösemittelgemisch hergestellt, das neben dem Alkyl-Carbonsäureester und gegebenenfalls Isophoron als weiteres Lösemittel 2-Phenoxyethanol in einer Menge von 10 bis 50 Gew.-% bezogen auf das gesamte Lösemittelgemisch enthält.

Das erhaltene Polyesterharz, welches 10 Gew.-% Isophoron enthält, wird mit weiteren 50 g Isophoron versetzt. Dann werden 15 g Phenolharz und 17,5 g Tetrabutylorthotitanat zugesetzt. Die Lösung wird mit 350 g Cyclohexanon, 350 g Dimethylglutarat und 200 g Solventnaphtha verdünnt.

### Beispiel 3 :

Durch gemeinsame Kondensation und Imidisierung unter Wasser- und Methanol-Abspaltung eines Gemisches aus 80 g Ethylenglycol, 130 g Terephthalsäure, 200 g Tris(2-hydroxylethyl)isocyanurat, 250 g Trimellitsäureanhydrid, 125 g 4,4'- Diaminodiphenylmethan, 100 g Bisphenol A, 1,4 g Zinkacetat bei 220 °C wird ein Polyesterimid-Vorprodukt erhalten. Nach dem Abdestillieren von etwa 80 Gew.-% der theoretischen Wasser- und Methanolmenge wird 50 g Isophoron zugesetzt und die Reaktion wird bei 220 °C fortgesetzt. Isophoron destilliert teilweise mit Wasser und Methanol ab. Ein Teil des zugesetzten Isophorons verbleibt im Reaktionsprodukt.

Das erhaltene Polyesterimidharz, welches 6 Gew.-% Isophoron enthält, wird mit 50 g Isophoron versetzt. Weiterhin werden 25 g Phenolharz und 30 g Tetrabutylorthotitanat zugesetzt. Die Lösung wird mit 600 g Cyclohexanon, 300 g Solventnaphtha und 300 g Methylbenzoat verdünnt.

### Beispiel 4 :

400 g eines aus Ethylenglykol, Neopentylglykol, 2-Butyl-2-ethyl-1,3-propandiol, Terephthalsäure, Tris(2-hydroxyethyl)isocyanurat, Trimellitsäureanhydrid, 4,4'-Diaminodiphenylmethan und Bisphenol A mit Zinkacetat-Zusatz synthetisierten Polyesterimidharzes wird in 300 g Methylbenzoat, 50 g Isophoron, 50 g

Dimethylsuccinat, 100 g Cyclohexanon und 100 g Solventnaphtha gelöst. 15 g Phenolharz und 12 g Tetrabutylorthotitanat werden zugegeben und homogen eingemischt.

### Beispiel 5 :

400 g Polyesterimidharz, synthetisiert aus den im Beispiel 4 angegebenen Ausgangsstoffen, wird in 200 g Methylbenzoat, 36 g Isophoron, 120 g Dimethyladipat, 100 g Cyclohexanon, 26 g Methyldiglycolacetat und 44 g Solvesso 100 gelöst, wonach 10 g Phenolharz und 12 gTetrabutylorthotitanat zugesetzt werden.

### Beispiel 6 (Referenz):

142 g Ethylenglykol, 184 g Tris(2-hydroxy-ethyl)-isocyanurat und 175 g Terephthalsäuredimethylester in Gegenwart von 0,2 g Zinkacetat und 0,2 g Tetrabutylorthotitanat wurden bei Temperaturen bis zu 210 °C umgeestert und gleichzeitig 57 g Methanol abdestilliert.
Anschließend wurden bei 180-190°C 230 g Trimellitsäureanhydrid und 119 g 4,4'-Diaminodiphenylmethan in einem Zeitraum von 30-60 Minuten kontinuierlich zugegeben. Bei 220 - 220°C erfolgt danach die Veresterung der entstandenen Dümiddicarbonsäure bis zu einer Säurezahl von < 5 unter Abspaltung von 43 g Reaktionswasser. Nach dem Verdünnen mit 250 g Methylbenzoat wurden 1000 g einer 75%igen Polyesterimid-Lösung erhalten.

### Beispiel 7 : (Referenz)

500g des Polyesterimidharzes aus Beispiel 6 wurden mit 26 g Methylbenzoat, 225 g Cyclohexanon und 75 g Solvent Naphtha verdünnt und mit 20 g Phenolharz und 15 g Tetrabutylorthotitanat homogen gemischt.
Der Lack hatte einen
Festkörpergehalt (1g/1h/180°C) von 36% und eine
Viskosität von 340 mPa.s bei 23°C.

| Lackierergebnisse (auf 0,8 mm-Kupferdraht lackiert) | |
|---|---|
| Durchmesser-Zunahme nach DIN EN 60851-2 | 62 µm |
| Wickelfestigkeit (0,8mm) nach DIN EN 60851-3 | 30 % |
| Wärmedruck nach DIN EN 60851-6 | 420°C |
| Hitzeschock (0,5h/220°C) nach DIN EN 60851-6 | i.O. |
| Tan-δ-Steilanstieg | 203°C |
| Peel-Test | 195 U |

### Beispiel 8 (Referenz):

500 g des Polyesterimidharzes aus Beispiel 6 wurden mit 100 g Methylbenzoat, 150 g Cyclohexanon und 75 g Solvent Naphtha verdünnt und mit 20 g Phenolharz und 15 g Tetrabutylorthotitanat homogen gemischt.
Der Lack hatte einen
Festkörpergehalt (1g/1h/180°C) von 36,2% und eine
Viskosität von 340 mPa.s bei 23°C.

| Lackierergebnisse (auf 0,8 mm-Kupferdraht lackiert) | |
|---|---|
| Durchmesser-Zunahme nach DIN EN 60851-2 | 70 µm |
| Wickelfestigkeit (0,8mm) nach DIN EN 60851-3 | 30 % |
| Wärmedruck nach DIN EN 60851-6 | 420°C |
| Hitzeschock (0,5h/220°C) nach DIN EN 60851-6 | i.O. |
| Tan-δ-Steilanstieg | 198°C |
| Peel-Test | 205 U |

### Beispiel 9 (Referenz):

500 g des Polyesterimidharzes aus Beispiel 6 wurden mit 137 g Methylbenzoat, 113 g Cyclohexanon und 75 g Solvent Naphtha verdünnt und mit 20 g Phenolharz und 15 g Tetrabutylorthotitanat homogen gemischt.
Der Lack hatte einen
Festkörpergehalt (1g/1h/180°C) von 36,9% und eine
Viskosität von 540 mPa.s bei 23°C.

| Lackierergebnisse (auf 0,8 mm-Kupferdraht lackiert) | |
|---|---|
| Durchmesser-Zunahme nach DIN EN 60851-2 | 62 µm |
| Wickelfestigkeit (0,8mm) nach DIN EN 60851-3 | 30 % |
| Wärmedruck nach DIN EN 60851-6 | 420°C |
| Hitzeschock (0,5h/220°C) nach DIN EN 60851-6 | i.O. |
| Tan-δ-Steilanstieg | 203°C |
| Peel-Test | 195 U |

### Beispiel 10 (Referenz):

500 g des Polyesterimidharzes aus Beispiel 6 wurden mit 175 g Methylbenzoat, 77 g Cyclohexanon und 75 g Solvent Naphtha verdünnt und mit 20 g Phenolharz und 15 g Tetrabutylorthotitanat homogen gemischt.
Der Lack hatte einen
Festkörpergehalt (1g/1h/180°C) von 36,5% und eine
Viskosität von 390 mPa.s bei 23°C.

| Lackierergebnisse (auf 0,8 mm-Kupferdraht lackiert) | |
|---|---|
| Durchmesser-Zunahme nach DIN EN 60851-2 | 66 µm |
| Wickelfestigkeit (0,8mm) nach DIN EN 60851-3 | 30 % |
| Wärmedruck nach DIN EN 60851-6 | 420°C |
| Hitzeschock (0,5h/220°C) nach DIN EN 60851-6 | i.O. |
| Tan-δ-Steilanstieg | 197°C |
| Peel-Test | 215 U |

Die in den Beispielen 7 bis 10 hergestellten Lacke wurden auf einer standardmäßigen Drahtlackiermaschine lackiert.

| Lackierbedingungen : | |
|---|---|
| Ofen | MAG HE 4 |
| Temperatur | 590°C |
| Auftragssystem | Düsen |
| Drahtdurchmesser | 0,80 mm |
| Zahl der Durchzüge | 11 |
| Zunahmegrad | 2 L |
| Abzugsgeschwindigkeit | 40 m/min |

### Beispiel 11 (Referenz):

142g Ethylenglykol, 184g Tris(2-hydroxy-ethyl)-isocyanurat und 175g Terephthalsäuredimethylester in Gegenwart von 0,2g Zinkacetat und 0,2g Tetrabutylorthotitanat wurden bei Temperaturen bis zu 210°C umgeestert und gleichzeitig 57g Methanol abdestilliert.
Anschließend wurden bei 180-190°C 230g Trimellitsäureanhydrid und 119g 4,4'-Diaminodiphenylmethan in einem Zeitraum von 30-60 Minuten kontinuierlich zugegeben. Bei 220 - 220°C erfolgt danach die Veresterung der entstandenen Diimiddicarbonsäure bis zu einer Säurezahl von < 5 unter Abspaltung von 43g Reaktionswasser. Nach dem Verdünnen mit 250g Phenoxyethanol wurden 1000g einer 75%igen Polyesterimid-Lösung erhalten.

### Beispiel 12 (Referenz):

500g des Polyesterimidharzes aus Beispiel 11 wurden mit 87g Methylbenzoat, 87g Cyclohexanon, 167g Phenoxyethanol und 107g Solvent Naphtha verdünnt und mit 20g Phenolharz, 20g Phthalsäuredimethylester und 10g Tetrabutylorthotitanat homogen gemischt.
Der Lack hatte einen
Festkörpergehalt (1g/1h/180°C) von 39,2% und eine
Viskosität von 1370 mPa.s bei 23°C.

| Lackierergebnisse (auf 0,8 mm-Kupferdraht lackiert) | |
|---|---|
| Durchmesser-Zunahme nach DIN EN 60851-2 | 70 µm |
| Wickelfestigkeit (0,8 mm) nach DIN EN 60851-3 | 25 % |
| Wärmedruck nach DIN EN 60851-6 | 375°C |
| Hitzeschock (0,5h/220°C) nach DIN EN 60851-6 | i.O. |
| Tan-δ-Steilanstieg | 199°C |

### Beispiel 13 (Referenz):

500g des Polyesterimidharzes aus Beispiel 11 wurden mit 126g Methylbenzoat, 126g Di-Basic-Ester, 122g Phenoxyethanol und 77g Solvent Naphtha verdünnt und mit 20g Phenolharz, 20g Phthalsäuredimethylester und 10g Tetrabutylorthotitartat homogen gemischt.
Der Lack hatte einen
Festkörpergehalt (1g/1h/180°C) von 37,0% und eine
Viskosität von 550 mPa.s bei 23°C.

| Lackierergebnisse (auf 0,8 mm-Kupferdraht lackiert) | |
|---|---|
| Durchmesser-Zunahme nach DIN EN 60851-2 | 68 µm |
| Wickelfestigkeit (0,8mm) nach DIN EN 60851-3 | 30 % |
| Wärmedruck nach DIN EN 60851-6 | 405°C |
| Hitzeschock (0,5h/220°C) nach DIN EN 60851-6 | i.O. |
| Tan-δ-Steilanstieg | 186°C |

### Beispiel 14 (Referenz):

500g des Polyesterimidharzes aus Beispiel 11 wurden mit 87g Methylbenzoat, 87g Cyclohexanon, 27g Phenoxyethanol, 145g Ethyldiglykol und 107g Solvent Naphtha verdünnt und mit 20g Phenolharz, 20g Phthalsäuredimethylester und 10g Tetrabutylorthotitanat homogen gemischt.
Der Lack hatte einen
Festkörpergehalt (1g/1h/180°C) von 38,6% und eine
Viskosität von 690 mPa.s bei 23°C.

| Lackierergebnisse (auf 0,8 mm-Kupferdraht lackiert) | |
|---|---|
| Durchmesser-Zunahme nach DIN EN 60851-2 | 63 µm |
| Wickelfestigkeit (0,8mm) nach DIN EN 60851-3 | 30 % |
| Wärmedruck nach DIN EN 60851-6 | 400°C |
| Hitzeschock (0,5h/220°C) nach DIN EN 60851-6 | i.O. |
| Tan-δ-Steilanstieg | 195°C |

### Beispiel 15 (Referenz):

500g des Polyesterimidharzes aus Beispiel 11 wurden mit 152g Methylbenzoat, 150g Ethyldiglykol, 40g Phenoxyethanol und 110g Solvent Naphtha verdünnt und mit 20g Phenolharz, 20g Phthalsäuredimethylester und 10g Tetrabutylorthotitanat homogen gemischt.
Der Lack hatte einen
Festkörpergehalt (1g/1h/180°C) von 39,0% und eine
Viskosität von 710 mPa.s bei 23°C.

| Lackierergebnisse (auf 0,8 mm-Kupferdraht lackiert) | |
|---|---|
| Durchmesser-Zunahme nach DIN EN 60851-2 | 72 µm |
| Wickelfestigkeit (0,8mm) nach DIN EN 60851-3 | 25 % |
| Wärmedruck nach DIN EN 60851-6 | 405°C |
| Hitzeschock (0,5h/220°C) nach DIN EN 60851-6 | i.O. |
| Tan-δ-Steilanstieg | 186°C |

### Beispiel 16 (Referenz):

500g des Polyesterimidharzes aus Beispiel 11 wurden mit 87g Methylbenzoat, 87g Cyclohexanon, 167g Phenoxyethanol und 107g Solvent Naphtha verdünnt und mit 20g Phenolharz, 20g Phthalsäuredimethylester und 10g Tetrabutylorthotitanat homogen gemischt.
Der Lack hatte einen
Festkörpergehalt (1g/1h/180°C) von 39,6% und eine
Viskosität von 1050 mPa.s bei 23°C.

| Lackierergebnisse (auf 0,8 mm-Kupferdraht lackiert) | |
|---|---|
| Durchmesser-Zunahme nach DIN EN 60851-2 | 70 µm |
| Wickelfestigkeit (0,8mm) nach DIN EN 60851-3 | 30 % |
| Wärmedruck nach DIN EN 60851-6 | 395°C |
| Hitzeschock (0,5h/220°C) nach DIN EN 60851-6 | i.O. |
| Tan-δ-Steilanstieg | 183°C |

### Beispiel 17 (Referenz):

500g des Polyesterimidharzes aus Beispiel 11 wurden mit 87g Methylbenzoat, 87g Cyclohexanon, 167g Phenoxyethanol und 107g Solvent Naphtha verdünnt und mit 4g Phenolharz, 4g Phenodur PR 612, 20g Phthalsäuredimethylester, 5g Titanacetylacetonat und 8g Kresyltitanat homogen gemischt.
Der Lack hatte einen
Festkörpergehalt (1g/1h/180°C) von 39,5% und eine
Viskosität von 1000 mPa.s bei 23°C.

| Lackierergebnisse (auf 0,8 mm-Kupferdraht lackiert) | |
|---|---|
| Durchmesser-Zunahme nach DIN EN 60851-2 | 68 µm |
| Wickelfestigkeit (0,8mm) nach DIN EN 60851-3 | 25 % |
| Wärmedruck nach DIN EN 60851-6 | 390°C |
| Hitzeschock (0,5h/220°C) nach DIN EN 60851-6 | i.O. |
| Tan-δ-Steilanstieg | 197°C |

### Beispiel 18 (Referenz):

500g des Polyesterimidharzes aus Beispiel 11 wurden mit 87g Methylbenzoat, 87g Cyclohexanon, 167g Phenoxyethanol und 107g Solvent Naphtha verdünnt und mit 5g Phenodur PR 612, 20g Phthalsäuredimethylester, 5g Titanacetylacetonat und 8g Kresyltitanat homogen gemischt.
Der Lack hatte einen
Festkörpergehalt (1g/1h/180°C) von 39,7% und eine
Viskosität von 1120 mPa.s bei 23°C.

| Lackierergebnisse (auf 0,8 mm-Kupferdraht lackiert) | |
|---|---|
| Durchmesser-Zunahme nach DIN EN 60851-2 | 70 µm |
| Wickelfestigkeit (0,8mm) nach DIN EN 60851-3 | 25 % |
| Wärmedruck nach DIN EN 60851-6 | 390°C |
| Hitzeschock (0,5h/220°C) nach DIN EN 60851-6 | i.O. |
| Tan-δ-Steilanstieg | 204°C |

### Beispiel 19 (Referenz):

500g des Polyesterimidharzes aus Beispiel 11 wurden mit 87g Methylbenzoat, 87g Cyclohexanon, 167g Phenoxyethanol und 107g Solvent Naphtha verdünnt und mit 5g Phenodur PR 612, 20g Phthalsäuredimethylester und 11g Titanacetylacetonat homogen gemischt.
Der Lack hatte einen
Festkörpergehalt (1g/1h/180°C) von 39,6% und eine
Viskosität von 935 mPa.s bei 23°C.

| Lackierergebnisse (auf 0,8 mm-Kupferdraht lackiert) | |
|---|---|
| Durchmesser-Zunahme nach DIN EN 60851-2 | 72 µm |
| Wickelfestigkeit (0,8mm) nach DIN EN 60851-3 | 25 % |
| Wärmedruck nach DIN EN 60851-6 | 385°C |
| Hitzeschock (0,5h/220°C) nach DIN EN 60851-6 | i.O. |
| Tan-δ-Steilanstieg | 192°C |

Die in den Beispielen 12 bis 19 hergestellten Lacke wurden auf einer standardmäßigen Drahtlackiermaschine lackiert.

| Lackierbedingungen : | |
|---|---|
| Ofen | MAG HE 4 |
| Temperatur | 590°C |
| Auftragssystem | Düsen |
| Drahtdurchmesser | 0,80 mm |
| Zahl der Durchzüge | 11 |
| Zunahmegrad | 2 L |
| Abzugsgeschwindigkeit | 40 m/min |

## Patentansprüche

1. Drahtlacke auf der Basis von Polyester-, Polyesterimid-, Polyamidimid- und/oder Polyurethanharzen, enthaltend eines oder mehrere der genannten Harze als Bindemittel sowie organische Lösemittel und gegebenenfalls Verdünnungsmittel, **dadurch gekennzeichnet, dass** mindestens 50 Gew.-% des Lösemittels oder des Lösemittel-Verdünnungsmittel-Gemisches aus einer Mischung eines monocyclischen aromatischen Alkyl-Carbonsäureesters der allgemeinen Formel 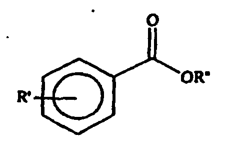 wobei R' = H, -CₙH₂ₙ₊₁ mit n = 1 bis 3 in m- oder p-Stellung ist, bevorzugt H, und wobei R" = -CₙH₂ₙ₊₁ mit n = 1 bis 10 ist, bevorzugt n = 1 bis 3 insbesondere bevorzugt n = 1, oder ein cycloaliphatischer Rest der allgemeinen Form -CₙH₂ₙ₋₁ mit n = 5 bis 10 ist, bevorzugt n = 5 - 7, insbesondere bevorzugt n = 6, mit Isophoron bestehen.

2. Drahtlacke nach Anspruch1, **dadurch gekennzeichnet, dass** das Lösemittel oder das Lösemittel-Verdünnungsmittel-Gemisch zu 80-100 Gew.-% aus Methylbenzoat und Isophoron im Verhältnis 1:1 bis 1:10 besteht.

3. Drahtlacke nach Anspruch 1 und 2, **dadurch gekennzeichnet, dass** ihr Festkörpergehalt 20 - 60 Gew.-% beträgt.

4. Drahtlacke nach Anspruch 1-3, **dadurch gekennzeichnet, dass** sie neben Methylbenzoat und Isophoron aromatische Kohlenwasserstoffe als Verdünnung enthalten.

5. Verfahren zur Herstellung von Drahtlacken auf der Basis von Polyester-, Polyamid-, Polyesterimid- und/oder Polyurethanharzen, die eines oder mehrere der genannten Harze als Bindemittel enthalten, **dadurch gekennzeichnet, dass** das oder die Bindemittel in einer Mischung eines monocyclischen aromatischen Alkyl-Carbonsäureesters der allgemeinen Formel 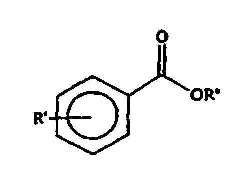 wobei R' = H, -CₙH₂ₙ₊₁ mit n = 1 bis 3 in m- oder p-Stellung ist, bevorzugt H, und wobei R" = -CₙH₂ₙ₊₁ mit n = 1 bis 10 ist, bevorzugt n = 1 bis 3 insbesondere bevorzugt n = 1, oder ein cycloaliphatischer Rest der allgemeinen Form -CₙH₂ₙ₋₁ mit n = 5 bis 10 ist, bevorzugt n = 5 - 7, insbesondere bevorzugt n = 6, mit Isophoron gelöst werden.

6. Verfahren zur Herstellung von Drahtlacken auf der Basis von Polyester- und/oder Polyesterimidharzen, die eines oder mehrere der genannten Harze als Bindemittel enthalten, **dadurch gekennzeichnet, dass** das oder die Bindemittel in einer Mischung eines monocyclischen aromatischen Alkyl-Carbonsäureester der allgemeinen Formel 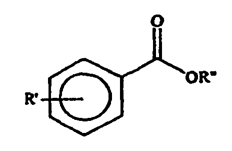 wobei R' = H, -CₙH₂ₙ₊₁ mit n = 1 bis 3 in m- oder p-Stellung ist, bevorzugt H, und wobei R" = -CₙH₂ₙ₊₁ mit n = 1 bis 10 ist, bevorzugt n = 1 bis 3 insbesondere bevorzugt n = 1, oder ein cycloaliphatischer Rest der allgemeinen Form -CₙH₂ₙ₋₁ mit n = 5 bis 10 ist, bevorzugt n = 5 - 7, insbesondere bevorzugt n = 6, mit Isophoron hergestellt werden.

7. Drahtlacke nach Anspruch 1, **dadurch gekennzeichnet, daß** sie als weiteres Lösemittel 2-Phenoxyethanol in einer Menge von 10 bis 50 Gew.-% bezogen auf den Gesamtanteil an Lösemitteln und Verdünnungsmitteln enthalten.

8. Verfahren nach Anspruch 5, **dadurch gekennzeichnet, daß** das oder die Bindemittel in einem Lösemittelgemisch gelöst werden, das neben dem Alkyl-Carbonsäureester und Isophoron als weiteres Lösemittel 2-Phenoxyethanol in einer Menge von 10 bis 50 Gew.-% bezogen auf das gesamte Lösemittelgemisch enthält.

9. Verfahren nach Anspruch 6, **dadurch gekennzeichnet, daß** das oder die Bindemittel in einem Lösemittelgemisch hergestellt werden, das neben dem Alkyl-Carbonsäureester und Isophoron als weiteres Lösemittel 2-Phenoxyethanol in einer Menge von 10 bis 50 Gew.-% bezogen auf das gesamte Lösemittelgemisch enthält.

## Claims

1. A wire enamel based on polyester, polyesterimide, polyamidoimide and/or polyurethane resins, containing one or more of said resins as binders, and organic solvents and optionally diluents, **characterized in that** at least 50% by weight of the solvent or of the solvent/diluent mixture consists of a mixture of a monocyclic aromatic alkyl-carboxylic acid ester of the general formula 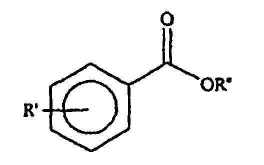 in which R' = H, -CₙH₂ₙ₊₁ with n = 1 to 3 in the m- or p-position, preferably H, and in which R" = -CₙH₂ₙ₊₁ with n = 1 to 10, preferably n = 1 to 3, particularly preferably n = 1, or a cycloaliphatic radical of the general formula -CₙH₂ₙ₋₁ with n = 5 to 10, preferably n = 5 - 7, particularly preferably n = 6, with isophorone.

2. The wire enamel as claimed in claim 1, **characterized in that** the solvent or solvent/diluent mixture comprises 80 - 100% by weight of methyl benzoate and isophorone in the ratio 1:1 to 1:10.

3. The wire enamel as claimed in either of claims 1 and 2, **characterized in that** its solids content is 20 - 60% by weight.

4. The wire enamel as claimed in any of claims 1 - 3, **characterized in that**, in addition to methyl benzoate and isophorone, it contains aromatic hydrocarbons as a diluents.

5. A process for the preparation of wire enamels based on polyester, polyamide, polyesterimide and/or polyurethane resins, which contain one or more of said resins as binders, **characterized in that** the binder or binders is or are dissolved in a mixture of monocyclic aromatic alkyl-carboxylic acid ester of the general formula 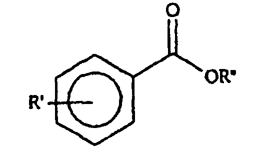 in which R' = H, -CₙH₂ₙ₊₁ with n = 1 to 3 in the m- or p-position, preferably H, and in which R" = -CₙH₂ₙ₊₁ with n = 1 to 10, preferably n = 1 to 3, particularly preferably n = 1, or a cycloaliphatic radical of the general formula -CₙH₂ₙ₋₁ with n = 5 to 10, preferably n = 5 - 7, particularly preferably n = 6, with isophorone.

6. A process for the preparation of wire enamels based on polyester and/or polyesterimide resins, which contain one or more of said resins as binders, **characterized in that** the binder or binders is or are prepared in a mixture of a monocyclic aromatic alkyl-carboxylic acid ester of the general formula 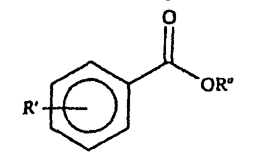 in which R' = H, -CₙH₂ₙ₊₁ with n = 1 to 3 in the m-or p-position, preferably H, and in which R" = -CₙH₂ₙ₊₁ with n = 1 to 10, preferably n = 1 to 3, particularly preferably n = 1, or a cycloaliphatic radical of the general formula -CₙH₂ₙ₋₁ with n = 5 to 10, preferably n = 5 - 7, particularly preferably n = 6, with isophorone.

7. The wire enamel as claimed in claim 1, **characterized in that** it contains, as a further solvent, 2-phenoxyethanol in an amount of 10 to 50% by weight, based on the total proportion of solvents and diluents.

8. The process as claimed in claim 5, **characterized in that** the binder or binders is or are dissolved in a solvent mixture which, in addition to the alkyl-carboxylic acid ester and isophorone, contains, as a further solvent, 2-phenoxyethanol in an amount of 10 to 50% by weight, based on the total solvent mixture.

9. The process as claimed in claim 6, **characterized in that** the binder or binders is or are prepared in a solvent mixture which, in addition to the alkyl-carboxylic acid and isophorone, contains, as a further solvent, 2-phenoxyethanol in an amount of 10 to 50% by weight, based on the total solvent mixture.

## Revendications

1. Email pour fils à base de résines de polyester, de polyestérimide, de polyamidoimide et/ou de polyuréthane, contenant une ou plusieurs desdites résines en tant que liants, et des solvants organiques et éventuellement des diluants, **caractérisé en ce qu'**au moins 50 % en poids du solvant ou du mélange solvant/diluant est constitué d'un ester d'acide alkylcarboxylique aromatique monocyclique de formule générale 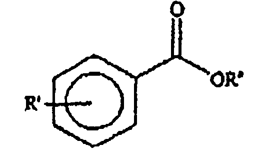 dans laquelle R' = H, -CₙH₂ₙ₊₁ avec n = 1 à 3 en position m ou p, de préférence H, et dans laquelle R" = -CₙH₂ₙ₊₁, avec n = 1 à 10, de préférence n = 1 à 3, de façon particulièrement préférable n = 1, ou un radical cycloaliphatique de formule générale -CₙH₂ₙ₋₁, avec n = 5 à 10, de préférence n = 5 à 7, de façon particulièrement préférable n = 6, ou d'un mélange d'un ester d'acide alkylcarboxylique aromatique monocyclique avec de l'isophorone.

2. Email pour fils selon la revendication 1, **caractérisé en ce que** le solvant ou le mélange solvant/diluant comprend 80 à 100 % en poids de benzoate de méthyle et d'isophorone dans un rapport 1:1 à 1:10.

3. Email pour fils selon les revendications 1 et 2, **caractérisé en ce que** sa teneur en matières solides est de 20 à 60 % en poids.

4. Email pour fils selon l'une quelconque des revendications 1 à 3, **caractérisé en ce que**, en plus du benzoate de méthyle et de l'isophorone, il contient des hydrocarbures aromatiques en tant que diluants.

5. Procédé de préparation d'émail pour fils à base de résines de polyester, de polyamide, de polyesterimide et/ou de polyuréthane, qui contient une ou plusieurs desdites résines en tant que liants, **caractérisé en ce que** le ou les liants sont dissous dans un ester d'acide alkylcarboxylique aromatique monocyclique de formule générale 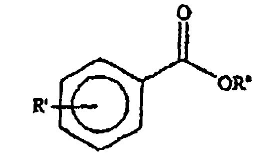 dans laquelle R' = H, -CₙH₂ₙ₊₁ avec n = 1 à 3 en position m ou p, de préférence H, et dans laquelle R" = -CₙH₂ₙ₊₁, avec n = 1 à 10, de préférence n = 1 à 3, de façon particulièrement préférable n = 1, ou un radical cycloaliphatique de formule générale -CₙH₂ₙ₋₁ avec n = 5 à 10, de préférence n = 5 à 7, de façon particulièrement préférable n = 6, ou d'un mélange dans un ester d'acide alkylcarboxylique aromatique monocyclique avec de l'isophorone.

6. Procédé de préparation d'émail pour fils à base de résines de polyester et/ou de polyesterimide, qui contient une ou plusieurs desdites résines en tant que liants, **caractérisé en ce que** le ou les liants sont préparés dans un ester d'acide alkylcarboxylique aromatique monocyclique de formule générale 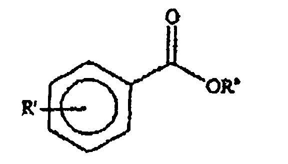 dans laquelle R' = H, -CₙH₂ₙ₊₁ avec n = 1 à 3 en position m ou p, de préférence H, et dans laquelle R" = -CₙH₂ₙ₊₁ avec n = 1 à 10, de préférence n = 1 à 3, de façon particulièrement préférable n = 1, ou un radical cycloaliphatique de formule générale -CₙH₂ₙ₋₁ avec n = 5 à 10, de préférence n = 5 à 7, de façon particulièrement préférable n = 6, ou d'un mélange dans un ester d'acide alkylcarboxylique aromatique monocyclique avec de l'isophorone.

7. Email pour fils selon la revendication 1, **caractérisé en ce qu'**il contient, en tant que solvant supplémentaire, du 2-phénoxyéthanol en une quantité de 10 à 50 % en poids, par rapport à la proportion totale des solvants et des diluants.

8. Procédé selon la revendication 5, **caractérisé en ce que** le ou les liants sont dissous dans un mélange de solvants qui, en plus de l'ester d'acide alkylcarboxylique et éventuellement de l'isophorone, contient en tant que solvant supplémentaire du 2-phénoxyéthanol en une quantité de 10 à 50 % en poids, par rapport au mélange total de solvants.

9. Procédé selon la revendication 6, **caractérisé en ce que** le ou les liants sont préparés dans un mélange de solvants qui, en plus de l'ester d'acide alkylcarboxylique et de l'isophorone, contient en tant que solvant supplémentaire du 2-phénoxyéthanol en une quantité de 10 à 50 % en poids, par rapport au mélange total de solvants.
